# FASCICULE DE BREVET EUROPEEN

(11) **EP 2 349 773 B1**
(45) Date de publication et mention de la délivrance du brevet: **21.11.2012**
(21) Numéro de dépôt: 09748425.7
(22) Date de dépôt: 22.09.2009
(51) Int. Cl.: B60K 37/06

(54) **MOLETTE DE COMMANDE POUR VEHICULE HYBRIDE**
BEDIENKNOPF FÜR EIN HYBRIDFAHRZEUG
CONTROL KNOB FOR HYBRID VEHICLE

(30) Priorité: 30.09.2008 FR 0856600
(43) Date de publication de la demande: 03.08.2011
(73) Titulaire: Peugeot Citroën Automobiles S.A., 78140 Vélizy Villacoublay (FR)
(72) Inventeur: ATEC TAM, Jean François, F-92160 Antony (FR); CHABERNAUD, Samuel, F-92250 La Garenne Colombes (FR); HOFFMANN, Christian, F-75014 Paris (FR); BAYARD, Loïc, F-91940 Les Ulis (FR)
(74) Mandataire: Vigand, Régis Louis Michel
(86) Numéro de dépôt international: PCT/FR2009/051788
(87) Numéro de publication internationale: WO 2010/037947

(56) Documents cités:
- EP-A- 1 580 058
- DE-A1-102004 058 147

## Description

La présente invention concerne de manière générale une molette de commande de plusieurs modes de fonctionnement hybride d'un véhicule automobile comprenant un groupe motopropulseur hybride, la molette comprenant des indicateurs des différents modes de fonctionnement hybrides en correspondance desquels sont prévus des indicateurs visuels et des moyens de commande mobiles pour commander l'activation desdits modes de fonctionnement hybrides. Plus particulièrement, l'invention concerne la gestion des modes de fonctionnement hybride en cas d'indisponibilité du mode actif. L'invention concerne également un procédé de gestion des différents modes de fonctionnement hybride du véhicule.

De manière générale, on entend ici par « véhicule automobile hybride », un véhicule automobile équipé d'un groupe motopropulseur hybride comportant par exemple un moteur thermique et un moteur électrique propres à entraîner les roues avant et arrière de façon séparée ou complémentaire, et une batterie rechargeable propre à alimenter en énergie le moteur électrique.

Une des difficultés liées aux véhicules automobiles hybrides réside dans l'utilisation des différents modes de fonctionnement hybrides offerts sur ce type de véhicule ainsi que dans les informations fournies à l'utilisateur du véhicule concernant l'utilisation de ces modes. Une molette de commande de cette facon est connue par EP 1580058.

A cet effet, un but de la présente invention est de répondre aux différents inconvénients de l'art antérieur mentionnés ci-dessus et en particulier, tout d'abord, de fournir une molette de commande permettant de clairement informer l'utilisateur du véhicule concernant la disponibilité du mode de fonctionnement hybride actif. Il peut être également souhaitable d'informer l'utilisateur sur les indisponibilités éventuelles des autres modes inactifs.

Pour cela un premier aspect de l'invention concerne une molette de commande selon revendication 1 Une telle molette de commande permet d'avertir simplement l'utilisateur que le mode actif n'est plus disponible tout en lui indiquant le nouveau mode activé. On remarquera tout particulièrement l'idée astucieuse d'utiliser l'indicateur visuel correspondant au mode de fonctionnement actif pour avertir l'utilisateur que ce mode n'est plus disponible. En effet ainsi, un indicateur visuel réalise deux fonctions différentes, une première fonction consistant à indiquer à l'utilisateur si le mode correspondant est actif ou non et une deuxième fonction consistant à alerter l'utilisateur lorsque le mode actif devient indisponible.

Selon une variante avantageuse de réalisation, les indicateurs visuels sont des indicateurs lumineux qui sont allumés pour indiquer que le mode correspondant est actif, et les moyens d'alerte sont mis en oeuvre par clignotement de l'indicateur lumineux correspondant au mode de fonctionnement actif devenu indisponible.

Selon une autre variante avantageuse de réalisation, chaque indicateur lumineux est composé d'au moins deux diodes électroluminescentes et les moyens d'alerte sont mis en oeuvre par l'allumage et l'extinction successifs de l'une puis de l'autre des diodes. Alternativement, chaque indicateur lumineux peut être composé d'une seule diode, les moyens d'alerte étant mis en oeuvre alors par le clignotement de la diode.

Selon une autre variante avantageuse de réalisation, un mode de fonctionnement automatique est automatiquement activé après la détection de l'indisponibilité du mode de fonctionnement actif.

Selon un deuxième aspect, l'invention concerne un dispositif de commande de plusieurs modes de fonctionnement utilisant la machine électrique et/ou la machine thermique d'un véhicule automobile comprenant un groupe motopropulseur hybride, le dispositif comprenant une molette de commande selon le premier aspect, et est caractérisé en ce qu'il comprend des moyens d'émission d'un message indiquant l'indisponibilité du mode de fonctionnement actif. Ce message est de préférence transmis à l'utilisateur sous la forme d'un affichage de l'information souhaitée sur un écran du véhicule.

Selon une variante avantageuse de réalisation, il est prévu en outre des moyens d'alerte sonore utilisés pour indiquer une impossibilité de continuer dans le mode de fonctionnement actif en raison d'une défaillance du groupe motopropulseur hybride. L'utilisation de tels moyens d'alerte sonore permet à l'utilisateur de distinguer un changement de mode en raison des conditions d'utilisation du véhicule, d'un changement de mode en raison d'une défaillance du groupe motopropulseur hybride.

Selon une autre variante avantageuse de réalisation, des moyens d'empêchement de changement dans le mode impossible sont activés.

Selon un troisième aspect, l'invention concerne un protocole de gestion des modes de fonctionnement utilisant la machine électrique et/ou la machine thermique d'un véhicule automobile comprenant un groupe motopropulseur hybride et une molette de commande de ces modes de fonctionnement, caractérisé en ce que le protocole comprend les étapes suivantes :
i) sélection et activation d'un mode de fonctionnement disponible soit automatiquement par le véhicule soit par manipulation de la molette de commande ;
ii) allumage d'un indicateur lumineux indiquant le mode de fonctionnement actif ;
iii) détection de l'indisponibilité du mode de fonctionnement actif en cours de roulage en fonction d'un changement de condition liée au véhicule ;
iv) émission d'un signal d'alerte au moyen de l'indicateur lumineux du mode de fonctionnement actif ;
v) passage dans un autre mode de fonctionnement et allumage de l'indicateur lumineux correspondant à cet autre mode.

Selon une variante du protocole, le passage dans un autre mode prévu à l'étape v) est effectué automatiquement dans un mode de fonctionnement automatique.

Selon une autre variante du protocole, il est prévu en outre les étapes suivantes :
vi) émission d'un message d'information indiquant l'indisponibilité du mode de fonctionnement précédemment activé ; et
vii) émission d'une alerte sonore en cas d'impossibilité du mode de fonctionnement en raison d'une défaillance du groupe motopropulseur hybride.

D'autres caractéristiques et avantages de la présente invention apparaîtront plus clairement à la lecture de la description détaillée qui suit de modes de réalisation de l'invention donnés à titre d'exemples nullement limitatifs et illustrés par le dessin annexé, dans lesquels :
- les figures 1 à 3 représentent une molette de commande selon un premier mode de réalisation de la présente invention ;
- les figures 4 à 6 représentent une molette de commande selon un deuxième mode de réalisation de la présente invention ;

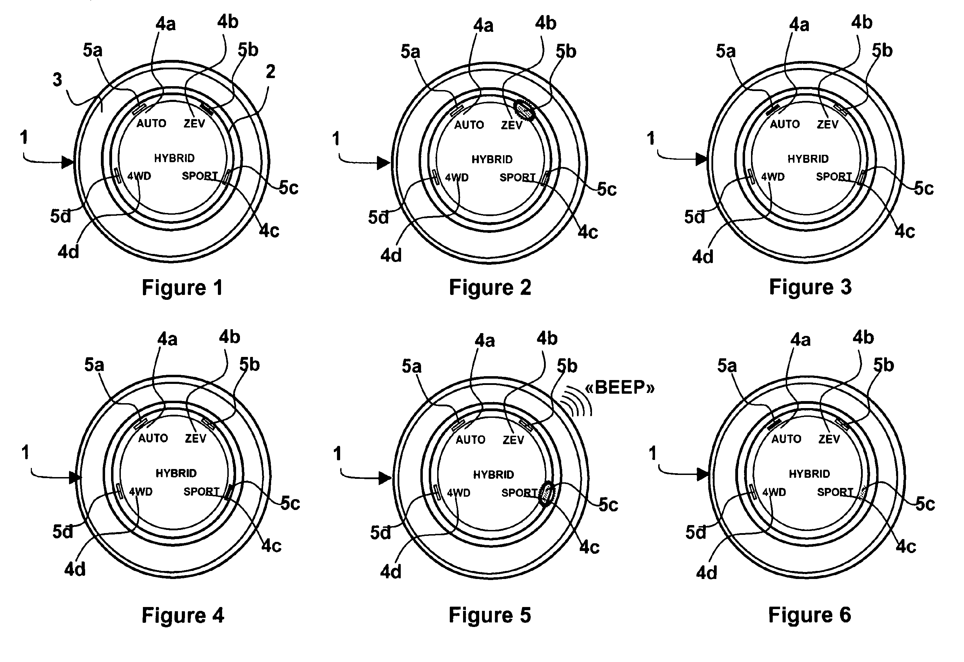

L'invention sera décrite ci-après uniquement à titre d'exemple non limitatif en relation avec les figures 1 à 6. Dans toute la description qui va suivre, il sera fait référence à une molette de commande en liaison avec ces figures dont les références numériques seront gardées identiques.

La figure 1 représente une molette de commande selon un premier mode de réalisation de la présente invention. Cette molette de commande est prévue pour commander plusieurs modes de fonctionnement utilisant la machine électrique et/ou la machine thermique d'un véhicule automobile comprenant un groupe motopropulseur hybride. La molette 1 comprend une première partie fixe 2, située de préférence au centre et en forme de disque, sur laquelle sont disposées des indicateurs de fonction 4a à 4d en correspondance desquels sont agencés des indicateurs visuels 5a à 5d, de préférence lumineux. À titre d'exemple, les modes de fonctionnement commandés par cette molette 1 peuvent être les suivants :
-- un mode « AUTO », sélectionné par défaut au démarrage, dans lequel la sélection entre le moteur électrique et le moteur thermique ou les deux du groupe motopropulseur hybride est géré automatiquement par le véhicule ;
-- un mode « SPORT » utilisant les deux moteurs électrique et thermique, et dans lequel le passage des rapports est plus court, un couple plus important étant délivré au moyen du moteur électrique ;
-- un mode « 4WD » dans lequel sont utilisées les quatre roues motrices, deux roues étant emmenées par le moteur thermique, les deux autres roues étant emmenées par le moteur électrique.
-- un mode « ZEV » (pour Zero Emission Vehicle), dans lequel uniquement le moteur électrique est utilisé.

D'une manière générale, il est prévu que lorsque l'utilisateur actionne la molette les indicateurs lumineux s'allument en temps réel (moins de 200 ms) pour indiquer la position de la commande de molette. Si la molette reste immobile pendant un certain laps de temps, par exemple 1s, le groupe motopropulseur hybride traite la demande de mode faite par le conducteur. Si le mode sélectionné est disponible, le groupe motopropulseur applique le choix du conducteur. En revanche, si le mode sélectionné est indisponible, le groupe motopropulseur passe automatiquement dans le mode automatique, puis corrige l'indication de mode et informe le conducteur.

Sur la figure 1, l'indicateur lumineux 5b est dans un premier état, i.e. allumé, indiquant que l'utilisateur à activer la partie mobile 3 de la molette en regard du mode ZEV, qui est donc le mode actif.

Sur la figure 2, le véhicule a détecté en cours de roulage que le mode ZEV actif n'est plus disponible. Pour en avertir l'utilisateur, la molette comprend des moyens d'alerte 6 utilisés en cas d'indisponibilité du mode de fonctionnement actif. Ces moyens d'alerte 6 sont avantageusement mis en oeuvre par le passage dans un deuxième état de l'indicateur visuel 5b pendant une période de temps prédéterminée, par exemple 7s. Selon une première variante, les moyens d'alerte 6 sont mis en oeuvre par clignotement, c'est-à-dire l'allumage et l'extinction successifs, de l'indicateur lumineux 5b correspondant au mode de fonctionnement ZEV actif devenu indisponible. Selon une deuxième variante, chaque indicateur lumineux est composé d'au moins deux diodes électroluminescentes et les moyens d'alerte sont mis en oeuvre par l'allumage et l'extinction successifs de l'une puis de l'autre des diodes.

Après la période de temps prévue pendant laquelle l'indicateur visuel 5b clignote pour indiquer que le mode ZEV est devenu indisponible, comme cela est représenté sur la figure 3, ce même indicateur 5b est alors placé dans un troisième état indiquant qu'il n'est plus actif tandis qu'un autre mode de fonctionnement est activé. Dans l'exemple représenté, le système est programmé pour passer automatiquement dans le mode de fonctionnement automatique après la détection de l'indisponibilité du mode de fonctionnement actif. C'est pourquoi l'indicateur visuel 5a est activé.

Ce premier mode de réalisation de l'invention présenté en liaison avec les figures 1 à 3 est particulièrement adapté pour indiquer à l'utilisateur lorsque le mode actif devient indisponible. Néanmoins, dans le cadre de la présente invention, il est apparu intéressant de pouvoir distinguer une indication d'indisponibilité du mode actif due, d'une part, aux conditions d'utilisation du véhicule et, d'autre part, à une défaillance du groupe motopropulseur hybride. C'est pourquoi, dans ce but, il est de préférence prévu d'utiliser le mode de réalisation sus-présenté pour les cas d'indisponibilité due aux conditions d'utilisation de véhicules. À titre d'exemple, les figures 1 à 3 représentent une situation dans laquelle le véhicule utilise dans un premier temps (figure 1) uniquement le moteur électrique de manière à réduire à zéro les émissions de gaz, ce mode ZEV étant possible à faible vitesse (par ex. 50 km/h) et lorsque la batterie du moteur électrique est suffisamment chargée. Dans un deuxième temps (figure 2), le véhicule ayant dépassé la vitesse limite pour rester dans le mode ZEV ou la batterie du moteur électrique n'étant plus suffisamment chargée, les moyens d'alerte 6 de l'indicateur visuel 5b correspondant au mode actif sont mis en oeuvre. Puis dans un troisième temps (figure 3), le nouveau mode activé, ici le mode AUTO, est indiqué via l'allumage de l'indicateur lumineux 5a.

En cas d'indisponibilité du mode actif dû à une défaillance du groupe motopropulseur hybride, il est avantageusement prévu d'alerter doublement l'utilisateur comme cela va être décrit en liaison avec les figures 4 à 6.

La figure 4 représente une molette de commande sur laquelle l'indicateur lumineux 5c est allumé indiquant à l'utilisateur qu'il est dans le mode SPORT correspondant.

La figure 5 représente le cas où, en cours de roulage, une défaillance du groupe motopropulseur hybride rend le mode SPORT indisponible. De la même manière que précédemment, les moyens d'alerte sont alors mis en oeuvre de sorte que l'indicateur visuel 5c correspondant au mode SPORT est placé dans un deuxième état, par exemple clignotant, pour alerter l'utilisateur que ce mode est devenu indisponible. En outre, il est prévu des moyens additionnels d'alerte pour avertir l'utilisateur de la défaillance rendant impossible toute utilisation ultérieure de ce mode avant traitement de cette défaillance. Ces moyens additionnels d'alerte sont de préférence un indicateur sonore émettant un signal « BEEP ».

La figure 6 représente la situation après l'écoulement de la période de temps prédéterminée durant laquelle l'indicateur visuel 5c est clignotant. Le mode de fonctionnement automatique est activé, i.e. l'indicateur lumineux 5a est allumé, et le mode de fonctionnement SPORT est placé dans un état d'indisponibilité au moyen de son indicateur lumineux qui reste allumé dans un état différent de celui de l'état d'activation. Pour cela, on pourra utiliser comme indicateur lumineux deux diodes électroluminescentes, l'une verte pour indiquer que le mode est actif et l'autre orange pour indiquer qu'il est indisponible.

Selon un autre aspect, l'invention concerne un protocole de gestion des modes de fonctionnement au moyen d'une molette de commande telle que présentée ci-dessus. Le protocole comprend les étapes suivantes :
i) sélection et activation d'un mode de fonctionnement disponible soit automatiquement par le véhicule soit par manipulation de la molette de commande ;
ii) allumage d'un indicateur lumineux indiquant le mode de fonctionnement actif ;
iii) détection de l'indisponibilité du mode de fonctionnement actif en cours de roulage en fonction d'un changement de condition liée au véhicule ;
iv) émission d'un signal d'alerte au moyen de l'indicateur lumineux du mode de fonctionnement actif ;
v) passage dans un autre mode de fonctionnement et allumage de l'indicateur lumineux correspondant à cet autre mode.

Selon une variante du protocole, le passage dans un autre mode prévu à l'étape v) est effectué automatiquement dans un mode de fonctionnement automatique.

Selon une autre variante du protocole, il est prévu en outre les étapes suivantes :
vi) émission d'un message d'information indiquant l'indisponibilité du mode de fonctionnement précédemment activé ; et
vii) émission d'une alerte sonore en cas d'impossibilité du mode de fonctionnement en raison d'une défaillance du groupe motopropulseur hybride.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

En particulier, la molette présentée en liaison avec les figures, a été décrite avec une partie intérieure fixe et une partie extérieure mobile, on comprendra néanmoins qu'il est envisageable de réaliser une molette avec une partie intérieure rotative et une partie extérieure fixe supportant les indications de fonction et les indicateurs lumineux.

On notera également, que les indicateurs lumineux peuvent être agencés en dessous des indicateurs de fonction au niveau du disque central fixe plutôt que sur un anneau fixe concentrique à ce disque que représenté sur les figures.

On notera encore qu'il peut être prévu des moyens d'émission d'un message indiquant l'indisponibilité du mode de fonctionnement actif. Ce message est de préférence transmis à l'utilisateur sous la forme d'un affichage de l'information souhaitée sur un écran du véhicule.

On notera enfin que le véhicule automobile hybride est à titre d'exemple une voiture. Cependant l'invention n'est pas limitée à cette application. Elle concerne en effet tout type de véhicule automobile hybride, et notamment les camions, les véhicules utilitaires, les cars (ou bus), les engins de chantier et les machines agricoles.

## Revendications

1. Molette de commande (1) de plusieurs modes de fonctionnement utilisant la machine électrique et/ou la machine thermique d'un véhicule automobile comprenant un groupe motopropulseur hybride, la molette comprenant des indicateurs (4a-4d) des différents modes de fonctionnement en correspondance desquels sont prévus des indicateurs visuels (5a-5d) et des moyens de commande mobiles (3) pour commander l'activation desdits modes de fonctionnement, les indicateurs (4a-4d) des différents modes de fonctionnement et les indicateurs visuels (5a-5d) et les moyens de commande mobiles (3) appartenant à la molette, l'indicateur visuel correspondant au mode de fonctionnement activé étant dans un premier état pour indiquer que ce mode est actif, **caractérisée en ce que** la molette comprend des moyens d'alerte (6) pour prévenir en cas d'indisponibilité du mode de fonctionnement actif, survenue en cours de roulage, ces moyens d'alerte étant mis en oeuvre par le passage dans un deuxième état de l'indicateur visuel correspondant au mode actif pendant une période de temps prédéterminée, et **en ce qu'**après cette période de temps l'indicateur visuel du mode devenu indisponible est placé dans un troisième état indiquant qu'il n'est plus actif tandis qu'un autre mode de fonctionnement est activé, l'indicateur visuel correspondant passant dans le premier état.

2. Molette de commande (1) selon la revendication 1, **caractérisée en ce que** les indicateurs visuels (5a-5d) sont des indicateurs lumineux qui sont allumés pour indiquer que le mode correspondant est actif, et **en ce que** les moyens d'alerte (6) sont mis en oeuvre par clignotement de l'indicateur lumineux correspondant au mode de fonctionnement actif devenu indisponible.

3. Molette de commande (1) selon la revendication 2, **caractérisée en ce que** chaque indicateur lumineux (5a-5d) est composé d'au moins deux diodes électroluminescentes et **en ce que** les moyens d'alerte sont mis en oeuvre par l'allumage successif de l'une puis de l'autre des diodes.

4. Molette de commande (1) selon l'une des revendications 1 à 3, **caractérisée en ce qu'**un mode de fonctionnement automatique (4a) est automatiquement activé après la détection de l'indisponibilité du mode de fonctionnement actif.

5. Dispositif de commande de plusieurs modes de fonctionnement utilisant la machine électrique et/ou la machine thermique d'un véhicule automobile comprenant un groupe motopropulseur hybride, le dispositif comprenant une molette de commande (1) selon l'une des revendications 1 à 4, et **caractérisé en ce qu'**il comprend des moyens d'émission d'un message indiquant l'indisponibilité du mode de fonctionnement actif.

6. Dispositif de commande selon la revendication 5, **caractérisé en ce qu'**il comprend en outre des moyens d'alerte sonores utilisés pour indiquer une impossibilité de continuer dans le mode de fonctionnement actif en raison d'une défaillance du groupe motopropulseur hybride.

7. Dispositif de commande selon la revendication 6, **caractérisé en ce que** des moyens d'empêchement de changement dans le mode impossible sont activés.

8. Protocole de gestion des modes de fonctionnement utilisant la machine électrique et/ou la machine thermique d'un véhicule automobile comprenant un groupe motopropulseur hybride et une molette de commande des modes de fonctionnement, **caractérisé en ce que** le protocole comprend les étapes suivantes :
i) sélection et activation d'un mode de fonctionnement disponible soit automatiquement par le véhicule soit par manipulation de la molette de commande ;
ii) allumage d'un indicateur lumineux indiquant le mode de fonctionnement actif ;
iii) détection de l'indisponibilité du mode de fonctionnement actif en cours de roulage en fonction d'un changement de condition liée au véhicule ;
iv) émission d'un signal d'alerte au moyen de l'indicateur lumineux du mode de fonctionnement actif ;
v) passage dans un autre mode de fonctionnement et allumage de l'indicateur lumineux correspondant à cet autre mode.

9. Protocole de gestion selon la revendication 8, **caractérisé en ce que** le passage dans un autre mode prévu à l'étape v) est effectué automatiquement dans un mode de fonctionnement automatique.

10. Protocole de gestion selon la revendication 8 ou 9, **caractérisé en ce qu'**il comprend en outre les étapes suivantes :
vi) émission d'un message d'information indiquant l'indisponibilité du mode de fonctionnement précédemment activé ; et
vii) émission d'une alerte sonore en cas d'impossibilité du mode de fonctionnement en raison d'une défaillance du groupe motopropulseur hybride.

## Claims

1. Knob (1) for controlling several operating modes using the electrical machine and/or the thermal engine of a motor vehicle comprising a hybrid propulsion unit, the knob comprising indicators (4a-4d) for the various operating modes in correspondence with which there are provided visual indicators (5a-5d) and movable control means (3) for controlling the activation of said operating modes, the indicators (4a-4d) for the various operating modes and the visual indicators (5a-5d) and the movable control means (3) belonging to the knob, the visual indicator corresponding to the activated operating mode being in a first state to indicate that this mode is active, **characterised in that** the knob comprises alert means (6) for warning in the case of unavailability of the active operating mode, occurring during running, these alert means being implemented by the passage into a second state of the visual indicator corresponding to the active mode during a predetermined period of time, and **in that**, after this period of time, the visual indicator for the mode that has become unavailable is placed in a third state indicating that it is no longer active while another operating mode is activated, the corresponding visual indicator going into the first state.

2. Control knob (1) according to claim 1, **characterised in that** the visual indicators (5a-5d) are light indicators that are switched on to indicate that the corresponding mode is active, and **in that** the alert means (6) are implemented by blinking of the light indicator corresponding to the active operating mode that has become unavailable.

3. Control knob (1) according to claim 2, **characterised in that** each light indicator (5a-5d) is composed of at least two light emitting diodes and **in that** the alert means are implemented by the successive switching on of one and then the other of the diodes.

4. Control knob (1) according to one of claims 1 to 3, **characterised in that** an automatic operating mode (4a) is automatically activated after the detection of the unavailability of the active operating mode.

5. Device for controlling several operating modes using the electrical machine and/or the thermal engine of a motor vehicle comprising a hybrid propulsion unit, the device comprising a control knob (1) according to one of claims 1 to 4, and **characterised in that** it comprises means of sending a message indicating the unavailability of the active operating mode.

6. Control device according to claim 5, **characterised in that** it also comprises audible alert means used for indicating the impossibility of continuing in the active operating mode because of a failure of the hybrid propulsion unit.

7. Control device according to claim 6, **characterised in that** means of preventing change to the impossible mode are activated.

8. Protocol for managing the operating modes using the electrical machine and/or the thermal machine of a motor vehicle comprising a hybrid propulsion unit and a knob controlling the operating modes, **characterised in that** the protocol comprises the following steps:
i) selection and activation of an available operating mode either automatically by the vehicle or by manipulation of the control knob;
ii) switching on of a light indicator indicating the active operating mode;
iii) detection of the unavailability of the active operating mode during running according to a change in condition relating to the vehicle;
iv) sending of an alert signal by means of the light indicator of the active operating mode;
v) change to another operating mode and switching on of the light indicator corresponding to this other mode.

9. Management protocol according to claim 8, **characterised in that** the change to the other mode provided at step v) is performed automatically in an automatic operating mode.

10. Management protocol according to claim 8 or 9, **characterised in that** it also comprises the following steps:
vi) sending of an information message indicating the unavailability of the operating mode previously activated; and
vii) sending of an audible alert in the event of impossibility of the operating mode because of a failure of the hybrid propulsion unit.

## Patentansprüche

1. Steuerknopf (1) für mehrere Betriebsmodi zur Verwendung der elektrischen Maschine und/oder der Verbrennungsmaschine eines Kraftfahrzeugs umfassend ein Hybrid-Antriebsaggregat, wobei der Knopf Anzeiger (4a-4d) für die verschiedenen Betriebsmodi umfasst, entsprechend derer optische Indikatoren (5a-5d) und mobile Steuergeräte (3) zur Aktivierungsansteuerung der besagten Betriebsmodi vorgesehen sind, und die Anzeiger (4a-4d) für die verschiedenen Betriebsmodi und die optischen Indikatoren (5a-5d) und mobilen Steuergeräte (3) zum Knopf gehören, und sich der optische Indikator, der dem aktivierten Betriebsmodus entspricht, in einem ersten Zustand befindet, um anzuzeigen, dass dieser Modus aktiv ist, **dadurch gekennzeichnet, dass** der Knopf Warnvorrichtungen (6) umfasst, um vor einer Nicht-Verfügbarkeit des aktiven Betriebsmodus zu warnen, die während des Fahrens aufgetreten ist, wobei diese Warnvorrichtungen durch den Übergang des optischen Indikators für den aktiven Modus während eines vorbestimmten Zeitraumes in einen zweiten Zustand zum Ausdruck kommen, und dadurch, dass die optischen Indikatoren nach diesem Zeitraum vom nicht verfügbar gewordenen Modus in einen dritten Zustand versetzt wird, der anzeigt, dass er nicht mehr aktiv ist, während ein anderer Betriebsmodus aktiviert wird und dessen optischer Indikator in den ersten Zustand übergeht.

2. Steuerknopf (1) nach Anspruch 1, **dadurch gekennzeichnet, dass** die optischen Indikatoren (5a-5d) Leuchtanzeigen sind, die aufleuchten, um anzuzeigen, dass der entsprechende Modus aktiv ist, und dadurch, dass die Warnvorrichtungen (6) durch ein Blinken der Leuchtanzeige angewandt werden, die dem aktiven Betriebsmodus entspricht, der nicht verfügbar geworden ist.

3. Steuerknopf (1) nach Anspruch 2, **dadurch gekennzeichnet, dass** jede Leuchtanzeige (5a-5d) zumindest aus zwei elektroluminiszierenden Dioden besteht, und dadurch, dass die Warnvorrichtungen durch die sukzessive Einschalten der einen und der anderen Diode angewandt wird.

4. Steuerknopf (1) nach einem der Ansprüche 1 bis 3, **dadurch gekennzeichnet, dass** der automatische Betriebsmodus (4a) automatisch nach der Erfassung der Nicht-Verfügbarkeit des aktiven Betriebsmodus aktiviert wird.

5. Steuervorrichtung für mehrere Betriebsmodi zur Verwendung der elektrischen Maschine und/oder der Verbrennungsmaschine eines Kraftfahrzeugs umfassend ein Hybrid-Antriebsaggregat, wobei die Vorrichtung einen Steuerknopf (1) nach einem der Ansprüche 1 bis 4 umfasst, **dadurch gekennzeichnet, dass** es Vorrichtungen zum Aussenden einer Nachricht umfasst, die die Nicht-Verfügbarkeit des aktiven Betriebsmodus anzeigt.

6. Steuervorrichtung nach Anspruch 5, **dadurch gekennzeichnet, dass** sie darüber hinaus akustische Warnvorrichtungen umfasst, die verwendet werden, um anzuzeigen, dass es aufgrund einer Betriebsstörung des Hybrid-Antriebsaggregats unmöglich ist, im aktiven Betriebsmodus fortzufahren.

7. Steuervorrichtung nach Anspruch 6, **dadurch gekennzeichnet, dass** Vorrichtungen zum Verhindern des Wechsels in den unmöglichen Modus aktiviert werden.

8. Protokoll zur Verwaltung der Betriebsmodi zur Verwendung der elektrischen Maschine und/oder der Verbrennungsmaschine eines Kraftfahrzeugs umfassend ein Hybrid-Antriebsaggregat und einen Steuerknopf für die Betriebsmodi, **dadurch gekennzeichnet, dass** das Protokoll die folgenden Schritte umfasst:
i) die Auswahl und Aktivierung eines verfügbaren Betriebsmodus entweder automatisch durch das Fahrzeug, oder durch das Betätigen des Steuerknopfes;
ii) das Einschalten einer Leuchtanzeige zur Anzeige des aktiven Betriebsmodus;
iii) die Erfassung der Nicht-Verfügbarkeit des aktiven Betriebsmodus im Laufe des Fahrens in Abhängigkeit von einer Bedingungsänderung im Zusammenhang mit dem Fahrzeug;
iv) die Ausgabe eines Warnsignals anhand der Leuchtanzeige für den aktiven Betriebsmodus;
v) der Übergang in einen anderen Betriebsmodus und das Einschalten der Leuchtanzeige, die diesem anderen Modus entspricht

9. Verwaltungsprotokoll nach Anspruch 8, **dadurch gekennzeichnet, dass** der im Schritt v) vorgesehene Übergang in einen anderen Modus in einem automatischen Modus automatisch ausgeführt wird.

10. Verwaltungsprotokoll nach Anspruch 8 oder 9, **dadurch gekennzeichnet, dass** es darüber hinaus die folgenden Schritte umfasst:
vi) die Ausgabe einer Informationsnachricht zur Angabe der Nicht-Verfügbarkeit des zuvor aktivierten Betriebsmodus; und
vii) die Ausgabe eines akustischen Warnsignals für den Fall, dass der Betriebsmodus aufgrund einer Betriebsstörung des Hybrid-Antriebsaggregats nicht aktiviert werden kann.
